# DEMANDE DE BREVET EUROPEEN

(11) **EP 4 807 940 A1**
(43) Date de publication de la demande: **16.09.2026**
(21) Numéro de dépôt: 26163110.5
(22) Date de dépôt: 09.03.2026
(51) Int. Cl.: H02J 3/46, H02J 13/00, H02J 3/466, H02J 13/12

(54) **PROCEDE D ESTIMATION D'UNE VARIATION ET PROCEDE DE REDUCTION DES EMISSIONS DE GAZ A EFFET DE SERRE D'UN SYSTEME D ALIMENTATION ELECTRIQUE**

(30) Priorité: 11.03.2025 FR 2502425
(71) Demandeur: Energy Pool Developpement, 73370 Le Bourget-du-Lac (FR)
(72) Inventeur: SAINT-LEGER, Romain, 73370 LE BOURGET-DU-LAC (FR); CAQUANT, Lauren, 73370 LE BOURGET-DU LAC (FR); CARTIGNY, Arnaud, 73370 LE BOURGET-DU-LAC (FR)
(74) Mandataire: Cabinet Beaumont

(57) **Abrégé**

La présente description concerne un procédé d'estimation d'une variation des émissions de gaz à effet de serre d'un système d'alimentation électrique, sur une période d'optimisation, comprenant :
a) la réception de caractéristiques de fonctionnement, comprenant une période de disponibilité d'activation, un sens d'activation, et une capacité de report, d'un système d'électricité flexible ;
b) la réception d'informations sur le système d'alimentation électrique comprenant un état de la demande et une répartition de la demande entre une pluralité de générateurs, au cours d'une période historique ;
c) la détermination d'une période d'activation et d'une période de report, la période d'activation étant comprises dans la période de disponibilité d'activation et la période de report étant comprise dans la période d'optimisation ;
d) le calcul de la variation des émissions générée par une variation de la demande sur la période d'activation et une variation opposée de la demande sur la période de report.

## Description

### Domaine technique

La présente description concerne de façon générale le domaine des dispositifs et systèmes électroniques de gestion d'énergie, et en particulier un procédé et un système d'estimation d'une variation et un procédé, et un système de réduction, des émissions de gaz à effet de serre d'un système d'alimentation électrique.

### Technique antérieure

Une difficulté à laquelle doivent faire face de façon récurrente les systèmes d'alimentation électrique est d'équilibrer, à tout instant, l'offre et la demande afin d'éviter une surcharge du réseau de transmission ou un manque de production, qui pourrait conduire à des pannes d'électricité générales.

La fréquence du système est l'indicateur le plus important d'un déséquilibre de puissance instantanée sur le système d'alimentation électrique. En effet, une augmentation de la consommation d'électricité provoque une augmentation de la demande de puissance sur des machines de production synchrones et provoque ainsi un ralentissement de leur vitesse de rotation. A l'inverse, un surplus de production d'électricité, et donc une augmentation de fréquence, va entraîner une réduction du besoin de puissance instantanée.

En Europe, c'est le rôle du gestionnaire du réseau de transport (TSO - de l'anglais Transmission System Operator) de la zone géographique concernée d'assurer la stabilité du système d'alimentation électrique, en organisant et en supervisant des actions et des mécanismes associés à la réduction ou à la résolution de déséquilibres prévisionnels ou au contrôle de la fréquence. D'autres pays ont des entités qui jouent un rôle similaire. Dans les réseaux de transmission relativement grands, il y a en général trois couches de contrôle d'un déséquilibre prévisionnel ou de contrôle de fréquence utilisées pour faire face aux écarts de fréquence : primaire, secondaire et tertiaire. Le contrôle de fréquence primaire (PFC - de l'anglais « Primary Frequency Control »), connu aussi sous le nom de réserve de maintien de fréquence (FCR - de l'anglais « Frequency Containment Reserve »), est assuré de manière prédominante par la capacité de statisme des gros générateurs. Le contrôle de fréquence secondaire ou la réserve automatique de rétablissement de la fréquence (aFRR - de l'anglais « automatic Frequency Restauration Reserve »), assure un relai au contrôle de fréquence primaire dans le maintien de la fréquence du réseau. La réserve secondaire a par exemple un temps de réaction plus long comparé à celui de la réserve primaire. Toutefois, l'arrivée de la technique de réponse de la demande (DR) ou de flexibilité de la demande (en anglais « Demand-Response » (DR) ou « Demand-Side Management » (DSM) ou « Demand-Side Flexibility » (DSF))dans le développement des réseaux intelligents d'aujourd'hui a fait du site demandeur, autrement appelé site de soutirage ou consommateur d'électricité, un nouvel acteur de la stabilité d'un système d'alimentation électrique. En effet, les sites industriels souhaitent souvent accepter une certaine flexibilité dans leur consommation de puissance en échange d'incitations financières comme un coût réduit de l'énergie ou une rémunération explicite séparée du coût de fourniture.

L'énergie distribuée par le système d'alimentation électrique est générée par un ensemble de dispositifs ayant des méthodes de génération d'énergie variées, chaque dispositif ayant un coût de production et une émission de gaz à effet de serre associée.

Il existe un besoin technique pour un dispositif et procédé d'estimation d'une variation des émissions de gaz à effet de serre (ΔE) d'un système d'alimentation électrique fonctionnant en service-système ou en demande-réponse et pour un dispositif et procédé configuré pour réduire l'émission de gaz à effet de serre d'un système d'alimentation électrique tout en assurant une stabilité du système.

### Résumé de l'invention

Un mode de réalisation prévoit un procédé d'estimation d'une variation des émissions de gaz à effet de serre d'un système d'alimentation électrique fonctionnant en réponse de la demande, sur une période d'optimisation, le procédé comprenant :
a) la réception, par un dispositif de commande, de caractéristiques de fonctionnement, comprenant au moins une période de disponibilité d'activation, un sens d'activation, et une capacité de report, d'un ou plusieurs systèmes d'électricité flexibles, la période de disponibilité d'activation étant comprise dans la période d'optimisation ;
b) la réception, par le dispositif de commande, d'informations sur le système d'alimentation électrique comprenant un état de la demande et une répartition de la demande entre une pluralité d'actifs générateurs du système d'alimentation électrique, au cours d'une période historique, la période historique étant antérieure à la période d'optimisation ;
c) la détermination, par le dispositif de commande, d'une période d'activation et d'une période de report, l'émission de gaz à effet de serre par les actifs générateurs du système d'alimentation électrique étant supérieure pendant la période d'activation que pendant la période de report si la demande diminue sur la période d'activation et augmente sur la période de report et l'émission de gaz à effet de serre par les actifs générateurs du système d'alimentation électrique étant inférieure pendant la période d'activation que pendant la période de report si la demande augmente sur la période d'activation et diminue sur la période de report, la période d'activation étant comprises dans la période de disponibilité d'activation d'au moins un des un ou plusieurs systèmes d'électricité flexibles et la période de report étant comprise dans la période d'optimisation ;
d) le calcul, par le dispositif de commande, de la variation des émissions de gaz à effet de serre générée par une variation de la demande sur la période d'activation déterminée à l'étape c) et une variation opposée de la demande sur la période de report déterminée à l'étape c).

Un mode de réalisation prévoit un procédé de réduction des émissions de gaz à effet de serre d'un système d'alimentation électrique fonctionnant en demande-réponse, le procédé comprenant :
- le procédé d'estimation d'une variation des émissions de gaz à effet de serre décrit ci-dessus ; et
e) la transmission d'une commande à l'au moins un système d'électricité flexible pour que sa consommation, ou production, varie, selon le sens d'activation, par une puissance inférieure ou égale à la capacité de report, sur la période d'activation déterminée à l'étape c) et pour que sa consommation, ou production, varie, selon le sens opposé au sens d'activation, sur la période de report déterminée à l'étape c).

Selon un mode de réalisation, la période d'activation et la période de report sont déterminées de sorte que la variation des émissions de gaz à effet de serre soit négative, correspondant à une réduction des émissions de gaz à effet de serre.

Selon un mode de réalisation, à l'étape c), plusieurs couples sont déterminés, chaque couple comprenant une période d'activation et une période de report.

Selon un mode de réalisation :
- l'étape d) est répétée pour chaque couple déterminé à l'étape c) ; et
- la période d'activation et la période de report correspondent au couple générant la variation des émissions de gaz à effet de serre correspondant à une réduction des émissions de gaz à effet de serre la plus élevée.

Selon un mode de réalisation, à l'étape c), une fonction de résolution d'un problème d'optimisation est utilisée pour déterminer la période d'activation et la période de report.

Selon un mode de réalisation, le procédé comprend en outre, à l'étape c), la détermination d'une puissance d'activation, la puissance d'activation étant inférieure ou égale à la capacité de report de l'au moins un des systèmes d'électricité flexibles et la puissance d'activation correspondant à une variation de la demande, générée par l'au moins un système d'électricité flexible, au cours de la période d'activation.

Selon un mode de réalisation, le procédé comprend en outre, après l'étape b) et avant l'étape c), pour une pluralité de pas de temps de la période d'optimisation, la détermination d'une évolution de la répartition de la demande entre une pluralité d'actifs générateurs du système d'alimentation électrique.

Selon un mode de réalisation, le procédé comprend en outre, après l'étape b) et avant l'étape c), pour la pluralité de pas de temps de la période d'optimisation, la détermination d'une émission de gaz à effet de serre de la pluralité d'actifs générateurs du système d'alimentation électrique.

Selon un mode de réalisation, l'émission de gaz à effet de serre d'un actif générateur correspond à l'émission de gaz à effet de serre produite par la génération d'une unité d'énergie.

Selon un mode de réalisation, le procédé comprend en outre, après l'étape b) et avant l'étape c), pour une pluralité de pas de temps de la période d'optimisation, la détermination d'une évolution de la demande du système d'alimentation électrique.

Un autre mode de réalisation prévoit un dispositif de commande configuré pour :
a) recevoir des caractéristiques de fonctionnement, comprenant au moins une période de disponibilité d'activation, un sens d'activation et une capacité de report, d'un ou plusieurs systèmes d'électricité flexibles, la période de disponibilité d'activation étant comprise dans la période d'optimisation ;
b) recevoir des informations sur le système d'alimentation électrique comprenant un état de la demande sur la période d'optimisation et une répartition de la demande entre une pluralité d'actifs générateurs du système d'alimentation électrique, au cours d'une période historique, la période historique étant antérieure à la période d'optimisation ;
c) déterminer une période d'activation et une période de report, l'émission de gaz à effet de serre par les actifs générateurs du système d'alimentation électrique étant supérieure pendant la période d'activation que pendant la période de report si la demande diminue sur la période d'activation et augmente sur la période de report et l'émission de gaz à effet de serre par les actifs générateurs du système d'alimentation électrique étant inférieure pendant la période d'activation que pendant la période de report si la demande augmente sur la période d'activation et diminue sur la période de report, la période d'activation étant comprises dans la période de disponibilité d'activation d'au moins un des un ou plusieurs systèmes d'électricité flexibles ;
d) calculer la variation des émissions de gaz à effet de serre générée par une variation de la demande sur la période d'activation déterminée à l'étape c) et une variation opposée de la demande sur la période de report déterminée à l'étape c).

Selon un mode de réalisation, le dispositif est en outre configuré pour :
e) transmettre une commande à l'au moins un système d'électricité flexible pour que sa consommation, ou production, varie, selon le sens d'activation, par une puissance inférieure ou égale à la capacité de report, sur la période d'activation déterminée à l'étape c) et pour que sa consommation, ou production, varie, selon le sens opposé au sens d'activation, sur la période de report déterminée à l'étape c).

Un autre mode de réalisation prévoit un système de régulation d'une puissance comprenant :
- le dispositif de commande décrit ci-dessus ; et
- un ou plusieurs systèmes d'électricité flexibles,
le dispositif de commande étant configuré pour communiquer avec l'un ou plusieurs systèmes d'électricité flexibles.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un diagramme illustrant un système d'alimentation en puissance selon un mode de réalisation de la présente description ;
la figure 2 est un diagramme illustrant un système de production et de consommation électrique selon un mode de réalisation de la présente description ;
la figure 3A représente un procédé d'estimation d'une réduction des émissions de gaz à effet de serre d'un système d'alimentation électrique selon un mode de réalisation de la présente description ;
la figure 3B représente un procédé de réduction des émissions de gaz à effet de serre d'un système d'alimentation électrique selon un mode de réalisation de la présente description ;
la figure 4A est un graphe illustrant le coût unitaire d'une unité d'énergie produite par une pluralité de dispositifs ainsi qu'un exemple d'une répartition de la puissance produite par le système d'alimentation électrique entre la pluralité de dispositifs pendant une période d'activation selon un mode de réalisation de la présente description; et
la figure 4B est un graphe illustrant le coût unitaire d'une unité d'énergie produite par une pluralité de dispositifs ainsi qu'un exemple d'une répartition de la puissance produite par le système d'alimentation électrique entre la pluralité de dispositifs pendant une période de report selon un mode de réalisation de la présente description.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, l'évaluation d'un écart de fréquence d'un système d'alimentation électrique alternatif et des algorithmes d'optimisation sont connus d'une personne du métier et ne sont pas détaillés dans la présente description.

Dans la description qui suit, un actif est défini par un dispositif configuré pour délivrer ou recevoir de l'électricité et configuré pour moduler une énergie électrique reçue ou délivrée par rapport à une puissance de fonctionnement.

Dans la description qui suit, un système d'alimentation électrique est défini comme comprenant des consommateurs d'électricité, des producteurs d'électricité et un réseau d'alimentation électrique, le réseau d'alimentation électrique comprenant un ensemble d'infrastructures physiques d'acheminement d'électricité.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

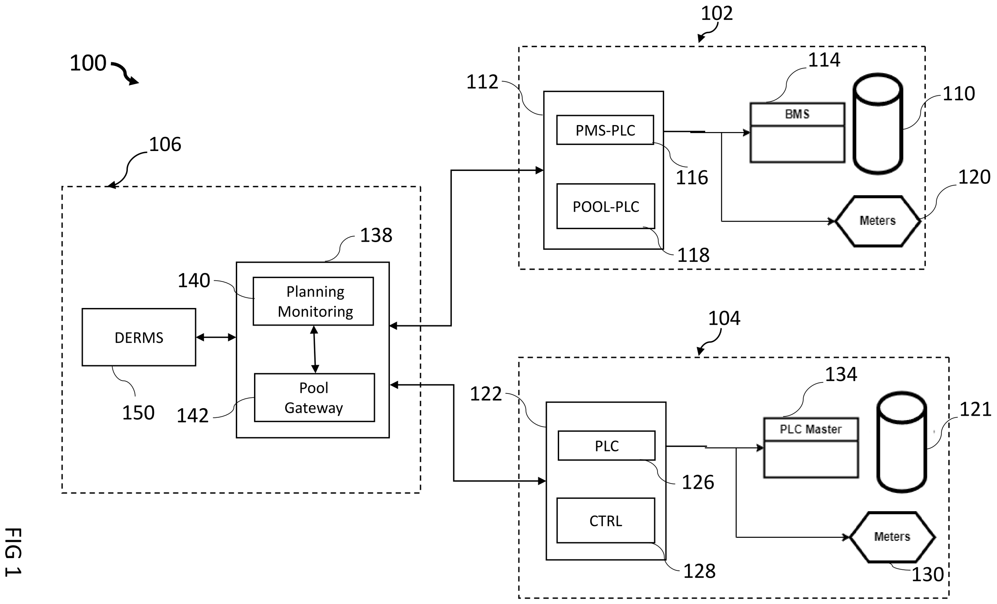

La figure 1 est un diagramme illustrant un système 100 d'alimentation en puissance selon un mode de réalisation de la présente description.

Dans l'exemple de la figure 1, le système 100 comprend un premier site client 102, un deuxième site client 104 et un système central de gestion d'énergie 106.

Chacun des sites clients 102, 104 dans le système 100 correspond à un site qui comprend au moins un actif, de l'énergie électrique étant reçue par le site client 102, 104 à partir d'un système d'alimentation électrique alternatif. Par exemple, un ou plusieurs contrats de fourniture d'énergie sont en place impliquant les sites clients 102, 104 et des opérateurs du système, établissant une relation commerciale entre les entités. Bien que deux sites clients 102, 104 soient illustrés dans l'exemple de la figure 1, dans des variantes de réalisation il peut y avoir un nombre quelconque de sites clients gérés par le système central de gestion d'énergie 106.

Dans l'exemple de la figure 1, l'actif du site client 102 est un réservoir de stockage d'énergie, par exemple une batterie 110 ou par exemple un banc de batteries à haute capacité.

La batterie 110 est par exemple couplée à une première unité de commande 112 sur site par l'intermédiaire d'un système de gestion de batterie 114 (« BMS », de l'anglais « Battery Management System »). La première unité de commande 112 comprend par exemple une première interface de surveillance et de commande 116 (« PMS-PLC ») et une première interface de communication et de contrôle 118 (« POOL-PLC »). La première interface de surveillance et de commande 116 est par exemple un contrôleur logique programmable (« PLC » de l'anglais « Programmable Logic Controller »), par exemple configuré pour mettre en œuvre une gestion de puissance, de manière similaire au rôle d'un système de gestion de puissance (PMS, en anglais « Power Management System ») ou configuré pour mettre en œuvre une boîte de réponse de la demande (DR).

La première interface de surveillance et de commande 116 est par exemple couplée à un ou plusieurs premiers dispositifs de mesure sur site 120 (METERS) configurés pour surveiller les puissances actives et réactives pour une seule et/ou pour les trois phases, et/ou d'autres propriétés électriques. Par exemple, les premiers dispositifs de mesure sur site 120 comprennent un ou plusieurs dispositifs de mesure électriques surveillant un courant électrique fourni au site et/ou reçu par le site, et un ou plusieurs dispositifs de mesure électriques surveillant un courant électrique reçu de la batterie 110, un ou plusieurs dispositifs de mesure électriques surveillant des phases des signaux électriques, et un ou plusieurs fréquencemètres AC (courant alternatif) surveillant la fréquence des tensions d'alimentation électriques présentes sur le réseau électrique, telles que vues par le site 102. D'autres propriétés qui peuvent être mesurées comprennent l'énergie électrique et le facteur de puissance. La première interface de surveillance et de commande 116 est par exemple configurée pour recevoir des données de mesure à partir des premiers dispositifs de mesure sur site 120.

La première unité de commande 112 est par exemple configurée pour assurer l'interface de communication entre le site client 102 et le système central de gestion 106, par exemple par l'intermédiaire de la première interface de communication et de contrôle 118.

La première interface de communication et de contrôle 118 est par exemple configurée pour communiquer avec le système central de gestion d'énergie 106, et dans certains cas avec des équipements clients, par l'intermédiaire du réseau Internet. Par exemple, bien que cela ne soit pas illustré en figure 1, la connexion entre la première interface de communication et de contrôle 118 et le réseau Internet se fait soit par l'intermédiaire d'un réseau de communication commuté, comme par l'intermédiaire d'un modem ADSL (ligne d'abonné numérique asymétrique), soit par l'intermédiaire d'une connexion sans fil, par exemple comprenant un réseau de communication cellulaire. La connexion entre la première interface de communication et de contrôle 118 et le réseau Internet est par exemple une connexion sécurisée, par exemple via l'utilisation d'un VPN (réseau virtuel privé, en anglais « Virtual Private Network »).

Le site client 104 comprend par exemple un actif 121, une deuxième unité de commande 122 jouant un rôle similaire à la première unité de commande 112 du site client 102, et qui ne sera pas décrite de nouveau en détail. La deuxième unité de commande 122 comprend par exemple une deuxième interface de surveillance et de commande 126 (« PLC ») et une deuxième interface de communication et de contrôle 128 (« CTRL ») qui sont par exemple similaires à la première interface de surveillance et de commande 116 et à la première interface de communication et de contrôle 118.

La deuxième interface de surveillance et de commande 126 est par exemple couplée à un ou plusieurs deuxièmes dispositifs de mesure sur site 130 (METERS) jouant un rôle similaire aux premiers dispositifs de mesure sur site 120.

L'actif 121 est par exemple couplé à la deuxième unité de commande 122 par l'intermédiaire d'un contrôleur logique programmable maître 134 (« PLC Master »).

Bien que dans l'exemple de la figure 1 une seule unité de commande 112, 122 soit prévue pour chaque site 102, 104, dans des variantes de réalisation certains sites pourraient comprendre plusieurs unités de commande.

Le système de gestion central 106 comprend par exemple un système de commande et d'acquisition de données 138, qui est par exemple implémenté par un système de gestion de ressources d'énergie distribuées (DERMS) ou qui est par exemple un système de commande de supervision et d'acquisition de données (SCADA, de l'anglais « Supervisory Control And Data Acquisition"), responsable de la réception de données à partir de chacune des interfaces de communication et de contrôle 118, 128, et est configuré pour fournir des signaux de commande aux sites clients 102, 104. En outre, le système de commande et d'acquisition de données 138 est par exemple responsable de l'acquisition et du stockage de mesures de données provenant des sites 102, 104, et aussi d'informations concernant l'état des sites. Le système de commande et d'acquisition de données 138 comprend par exemple un circuit de contrôle et de planification 140 (« Planning Monitoring ») et une interface centrale 142 (« Pool gateway »). L'interface centrale 142 est par exemple configurée pour recevoir et envoyer des données aux sites 102, 104 et au circuit de contrôle et de planification 140.

Le système central de gestion d'énergie 106 comprend aussi par exemple un système de gestion de ressources d'énergie distribuées (DERMS) 150, qui est par exemple une plateforme informatique configurée pour organiser une répartition de ressources entre des charges ou des batteries de divers sites clients du système 100. Le DERMS 150 fournit aussi par exemple une interface avec un serveur de marchés et avec un serveur d'opérateur de réseau électrique.

Par exemple, le serveur de marchés fournit des informations sur les prix de l'électricité pour des périodes courantes et/ou futures, et des informations sur des activations demandées par l'opérateur de réseau électrique. Le serveur d'opérateur de réseau électrique correspond par exemple à une plateforme informatique d'un opérateur du réseau électrique fournissant l'électricité aux sites clients 102, 104. En Europe, l'opérateur de réseau électrique correspond par exemple au gestionnaire du réseau de transport (TSO), et/ou au gestionnaire de réseau de distribution (DSO). Par exemple, le serveur d'opérateur de réseau électrique fournit des ordres d'activation au DERMS 150, et le DERMS 150 fournit des données de commande, comme des données de surveillance et/ou des états de charges, au serveur d'opérateur de réseau électrique.

Le DERMS 150 est par exemple configuré pour déterminer comment l'utilisation d'énergie au niveau des sites clients 102, 104 peut être adaptée au vu des prix de l'électricité pour des périodes courantes et/ou futures afin de réduire les coûts d'énergie et/ou de générer des revenus au niveau des sites client, par exemple par des réductions dans les charges de matière première ou en équilibrant des services dans le système d'alimentation électrique. Par exemple, le DERMS 150 est agencé pour transmettre des signaux de commande aux sites clients 102, 104 indiquant des périodes au cours desquelles la charge de la batterie 110 à partir du système d'alimentation électrique doit être mise en priorité, par exemple, en raison de prix de l'électricité relativement bas, et des périodes pendant lesquelles une décharge de la batterie 110 vers le système d'alimentation électrique doit être mise en priorité, par exemple en raison de prix de l'électricité relativement élevés.

Dans l'exemple de la figure 1, les sites clients 102, 104 sont des sites consommateurs d'électricités. Chaque site client 102, 104 regroupe un ou plusieurs consommateurs. Bien que cela ne soit pas représenté dans l'exemple de la figure 1, le système central de gestion d'énergie 106 est par exemple relié à un ou plusieurs sites clients générateurs comprenant un ou plusieurs actifs configurés pour générer de l'électricité et/ou relié à un ou plusieurs sites clients mixtes comprenant au moins un actifs consommateur d'électricité et au moins un actif générateur d'électricité.

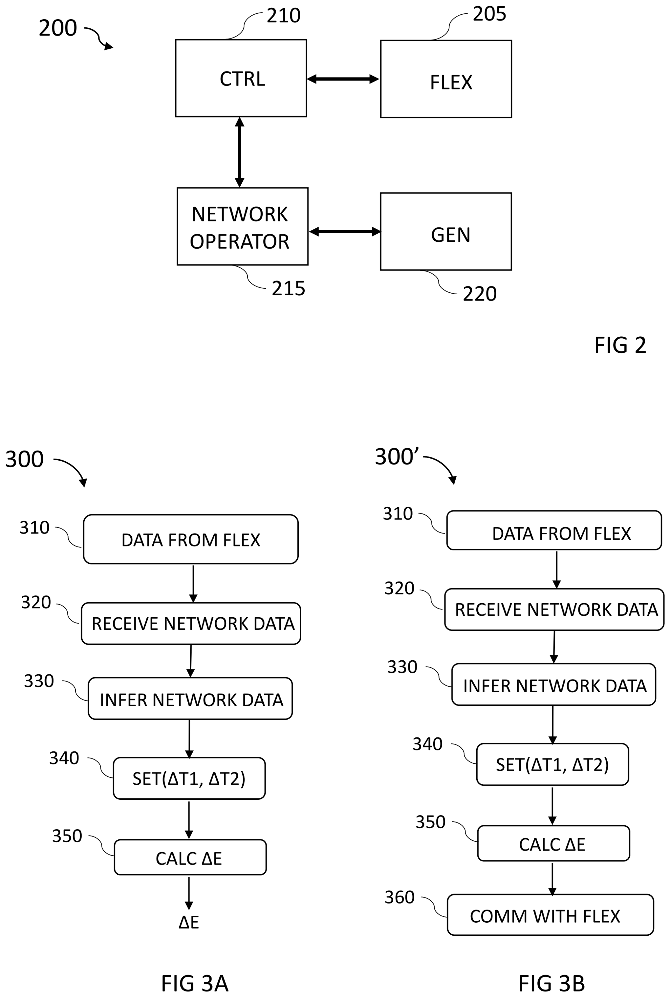

La figure 2 est un diagramme illustrant un système 200 de production et de consommation électrique selon un mode de réalisation de la présente description.

Le système 200 comprend :
- un ou plusieurs systèmes flexibles 205 (« FLEX »), par exemple le site client 102 ou le site 104 décrit en relation avec la figure 1 ;
- un dispositif de commande 210 (« CTRL »), par exemple compris dans le système central de gestion d'énergie 106 décrit en relation avec la figure 1, par exemple correspondant au circuit de contrôle et de planification 140 ;
- un gestionnaire 215 (« NETWORK OPERATOR ») du système d'alimentation électrique ; et
- un ou plusieurs générateurs 220 (« GEN »).

Par système « système flexible », on entend ici un ou plusieurs consommateurs d'électricité étant en mesure de réduire ou augmenter leur consommation sur demande et/ou un ou plusieurs producteurs d'électricité étant en mesure de réduire ou augmenter leur production sur demande et/ou un ou plusieurs actifs de stockage d'électricité étant en mesure de réduire ou augmenter leur électricité stockée sur demande. Un système flexible est par exemple un consommateur industriel ou tertiaire, un réservoir de stockage d'électricité, une centrale de production, etc. Un système flexible correspond par exemple à un site client décrit en relation avec la figure 1 et comprenant une interface de communication. L'interface de communication est par exemple configurée pour communiquer avec le dispositif de commande 210. Selon un mode de réalisation, le dispositif de commande 210 est configuré pour recevoir des caractéristiques de fonctionnement de chaque système flexible 205, comprenant au moins une période de disponibilité d'activation et une capacité de report et comprend éventuellement au moins une période de disponibilité de report et un taux de report. Chaque système flexible 205 est par exemple en mesure de réduire ou d'augmenter sa consommation ou est par exemple en mesure de réduire ou d'augmenter sa production, d'une puissance électrique supérieure ou égale à la capacité d'engagement, au cours de l'au moins une période de disponibilité d'activation. La variation de consommation ou de production est par exemple compensée par une variation inverse de consommation ou de production au cours de l'au moins une période de disponibilité de report.

Le « taux de report » correspond par exemple à un pourcentage de la variation de consommation ou de production qui sera compensée au cours de l'au moins une période de disponibilité de report.

Dans certains cas, le taux de report est par exemple nul. Par exemple, certaines industries ne sont pas en mesure d'introduire dans leur planning une production supplémentaire pour rattraper une production manquante. Il s'agit alors d'un effacement sans report (en anglais, «Load-Shedding»).

Dans d'autres cas, le taux de report est par exemple égal à 100% et correspond alors à un report total ou est par exemple supérieur à zéro et compris entre 0 et 100% et correspond alors à un report partiel. Selon des modes de réalisation, le taux de report peut être supérieur à 100%.

Une demande sur le système d'alimentation électrique diminue pendant la période de disponibilité d'activation et augmente éventuellement pendant la période de disponibilité de report. Par « demande sur un système » on entend une puissance à fournir par le système d'alimentation électrique à des actifs pour maintenir la stabilité du système.

Le dispositif de commande 210 comprend par exemple un ou plusieurs processeurs configurés pour exécuter des instructions du logiciel stockées dans une mémoire du dispositif. Dans une alternative, le dispositif de commande 210 comprend un circuit dédié tel qu'un circuit intégré propre à une application (ASIC, de l'anglais « Application-Specific Integrated Circuit »).

Dans la présente description, on entend par « générateur » un dispositif configuré pour générer et délivrer au système d'alimentation électrique une puissance électrique, inférieure ou égale à une puissance maximale propre. Chaque générateur 220 est par exemple configuré pour générer une puissance électrique et pour transmettre cette puissance électrique au système d'alimentation électrique, par exemple via le gestionnaire 215, de sorte que cette puissance électrique soit distribuée entre des actifs, par exemple comprenant les systèmes flexibles 205. Par exemple, un ou plusieurs contrats de fourniture d'énergie sont en place impliquant chaque générateur 220 et des opérateurs du réseau, établissant une relation commerciale entre les entités. Chaque générateur 220 est par exemple un barrage hydraulique, une éolienne, un panneau photovoltaïque, une centrale nucléaire, une centrale électrique à charbon, etc.

Selon un mode de réalisation, le dispositif de commande 210 est configuré pour recevoir du gestionnaire 215, ou d'un opérateur de marché, des informations indiquant un état de la demande et une répartition de la demande entre une pluralité d'actifs générateurs 220 du système d'alimentation électrique. L'état de la demande sur le système d'alimentation électrique correspond par exemple à une puissance électrique demandée par un ensemble d'actifs au système d'alimentation électrique. La demande varie par exemple en fonction du temps. Par exemple, le dispositif de commande 210 est configuré pour recevoir des informations sur une évolution de la demande et d'une répartition de la demande sur une période de temps passée. Le dispositif de commande est par exemple configuré pour estimer une évolution de la demande et une répartition de la demande sur une période d'optimisation future. Le dispositif de commande 210 est par exemple en outre configuré pour recevoir une évolution d'un prix de l'électricité au cours du temps sur la période de temps passée et/ou une évolution du coût unitaire d'une puissance produite par chacun des générateurs 220 et/ou une évolution des émissions unitaires de gaz à effet de serre par chacun des générateurs 220.

Par « coût unitaire », on entend le prix de revente d'une unité d'énergie générée par un générateur. Le coût unitaire s'exprime par exemple en euro par mégawatheure.

Par « émission unitaire de gaz à effet de serre », on entend l'émission de gaz à effet de serre produite par la génération d'une unité d'énergie générée par un générateur. L'émission unitaire de gaz à effet de serre s'exprime par exemple en gramme équivalent CO2 par mégawatt-heure, noté « gCO2e/MWh » ou « gCO2éq/MWh ».Par gaz à effet de serre on entend le dioxyde de carbone, le méthane, le dioxyde d'azote, etc. Une émission de chacun de ces gaz peut être exprimée en gramme équivalent CO2.

Le gestionnaire 215 est par exemple le gestionnaire de réseau de transport (GRT) en Europe, ou un système équivalent dans d'autres régions du monde.

La figure 3A représente un procédé 300 d'estimation d'une variation des émissions de gaz à effet de serre ΔE du système d'alimentation électrique selon un mode de réalisation de la présente description. Par exemple, le procédé 300 correspond à une simulation du fonctionnement du système d'alimentation électrique permettant l'estimation de la variation des émissions de gaz à effet de serre.

Le procédé 300 est par exemple mis en œuvre par un dispositif de commande, par exemple le dispositif de commande 210 décrit en relation avec la figure 2. En particulier, le procédé 300 est par exemple mis en œuvre par logiciel, le dispositif de commande comprenant un ou plusieurs processeurs configurés pour exécuter des instructions du logiciel stockées dans une mémoire du dispositif. Dans une alternative, le procédé 300 est par exemple, au moins partiellement, mis en œuvre par un circuit dédié tel qu'un circuit intégré propre à une application (ASIC, de l'anglais « Application-Specific Integrated Circuit »).

Le procédé 300 est par exemple mis en œuvre pour estimer une variation des émissions de gaz à effet de serre ΔE du système d'alimentation électrique sur une période d'optimisation fixée. La période d'optimisation est par exemple comprise entre 15 minutes et 1 année. La période d'optimisation est par exemple divisée en une pluralité de pas de temps, la durée d'un pas de temps étant comprise entre 1 seconde et 1 année.

Le procédé 300 comprend par exemple une étape 310 (« DATA FROM FLEX ») de réception de données au cours de laquelle le dispositif de commande est configuré pour recevoir des données de chacun des systèmes flexibles 205 décrits en relation avec la figure 2 sur la période d'optimisation.

Chaque système flexible 205 est par exemple configuré pour envoyer une ou plusieurs périodes de disponibilité d'activation comprises dans la période d'optimisation et par exemple une capacité de report sur la période d'optimisation et par exemple un sens d'activation.

Une période de disponibilité d'activation correspond à un intervalle de temps au cours duquel le système flexible 205 est par exemple en mesure d'être activé, c'est-à-dire de varier sa consommation ou sa production, par exemple par une puissance inférieure ou supérieure ou égale à la capacité de report, dans un premier sens de variation correspondant au sens d'activation.

Chaque système flexible 205 est par exemple en outre configuré pour envoyer un nombre maximal d'activations et/ou une ou plusieurs périodes de disponibilité de report comprises dans la période d'optimisation et/ou un taux de report et/ou un délai de report.

Une période de disponibilité de report correspond à un intervalle de temps au cours duquel le système flexible 205 est par exemple en mesure de varier sa consommation ou sa production, par exemple par une puissance inférieure ou égale à la capacité de report, dans un deuxième sens de variation, opposé au premier sens de variation. La variation de consommation ou production effectuée lors de la période de disponibilité d'activation est par exemple compensée, partiellement ou entièrement, par la variation de consommation ou production effectuée lors de la période de disponibilité de report. Le taux de compensation est par exemple défini par le taux de report. Si le taux de report est supérieur à 100%, la variation de consommation ou production effectuée lors de la période de disponibilité d'activation est compensée, à plus de 100%, par la variation de consommation ou production effectuée lors de la période de disponibilité de report. Le dispositif de commande est par exemple configuré pour stocker ces données dans une mémoire. Selon un mode de réalisation, un contrat commercial est établi entre chacun des systèmes flexibles 205 et le dispositif de commande, par exemple sur une période comprenant la période d'optimisation.

Par « délai de report », on entend une durée à partir de l'activation d'un système flexible 205, par exemple à partir de la fin de l'activation du système flexible 205, avant la fin de laquelle le report doit avoir été effectué. Par exemple, un industriel pourrait devoir avoir reporté sa consommation effacée sous un horizon de moins d'une semaine afin d'honorer un carnet de commandes.

Le procédé 300 comprend par exemple une étape 320 (« RECEIVE NETWORK DATA »), par exemple suivant l'étape 310, de réception de données au cours de laquelle le dispositif de commande est configuré pour recevoir des données caractérisant le système d'alimentation électrique.

Le dispositif de commande est par exemple configuré pour recevoir des informations indiquant un état de la demande, une répartition de la demande entre des générateurs, par exemple les actifs générateurs 220 décrits en relation avec la figure 2, et/ou une évolution d'un prix de l'électricité.

Le dispositif de commande est par exemple configuré pour recevoir ces informations par l'intermédiaire du gestionnaire 215 décrit en relation avec la figure 2.

Selon un autre mode de réalisation, le dispositif de commande est configuré pour recevoir un état de la demande, une répartition de la demande entre des générateurs et/ou une évolution d'un prix de l'électricité sur une période historique correspondant à un intervalle de temps antérieur à la période d'optimisation.

La période historique a une durée par exemple comprise entre un pas de temps et dix années, ou par exemple comprise entre 15 minutes et dix années. Ces données sont par exemple collectées et enregistrées en temps réel ou sont par exemple obtenues d'une ou plusieurs bases de données, par exemple enregistrées dans le dispositif de commande.

En pratique, l'ordre des étapes 310 et 320 peut être inversé.

Le procédé 300 comprend par exemple une étape 330 (« INFER NETWORK DATA »), par exemple suivant les étapes 310 et 320. Au cours de l'étape 330, le dispositif de commande est par exemple configuré pour estimer une évolution de la demande, une répartition de la demande et/ou une évolution du prix de l'électricité sur la période d'optimisation en fonction des informations reçues à l'étape 320 concernant la période historique. Par exemple, une évolution de la demande, une répartition de la demande et/ou une évolution du prix de l'électricité sur la période d'optimisation est estimée en fonction du jour de la semaine, de l'heure, de la date, etc. Le dispositif de commande est par exemple configuré pour générer une ou plusieurs prévisions de l'évolution de la demande, de la répartition de la demande et/ou une évolution du prix de l'électricité sur la période d'optimisation, sur la base des données collectées à l'étape 320 pour la période historique. L'une ou plusieurs prévisions sont par exemple utilisées pour identifier à l'avance des couples, comprenant un pas de temps d'activation et un pas de temps de report, générant une émission de gaz à effet de serre évitée relativement grande.

Le dispositif de commande est par exemple configuré pour estimer une évolution des émissions de gaz à effet de serre par le système d'alimentation électrique au cours de la période d'optimisation. Par exemple, l'estimation d'une émission de gaz à effet de serre est effectuée à partir d'une base de données, par exemple la base de données publique nommée « Base Empreinte », par exemple stockée en mémoire par le dispositif de commande. La base de données établit par exemple une correspondance entre un type d'actif générateur et une émission unitaire de gaz à effet de serre, c'est-à-dire une émission de gaz à effet de serre par unité d'énergie générée. Selon d'autres modes de réalisation, le dispositif de commande est configuré pour recevoir une valeur d'émission unitaire de gaz à effet de serre pour chacun des générateurs du système d'alimentation électrique.

Le dispositif de commande est par exemple configuré pour effectuer une analyse statistique pour estimer un état de la demande, une répartition de la demande entre des générateurs et/ou une évolution d'un prix de l'électricité sur la période d'optimisation.

Si un système flexible 205 ne communique pas de taux de report et/ou de délai de report ou de période de disponibilité de report lors de l'étape 310, le dispositif de commande est par exemple configuré pour estimer le taux de report et le délai de report, lors de l'étape 330, par exemple en fonction de données sur la période historique. Par exemple, le dispositif de commande est par exemple configuré pour estimer le taux de report et le délai de report en effectuant une moyenne du taux de report et du délai de report, respectivement, pour le système flexible 205, sur une tout ou une partie de la période historique.

Selon un autre mode de réalisation, un dispositif de calcul externe au système 100 décrit en relation avec la figure 1 est configuré pour recevoir les données sur la période historique et pour effectuer une analyse statistique pour estimer un état de la demande, une répartition de la demande entre des générateurs et/ou une évolution d'un prix de l'électricité sur la période d'optimisation. Le dispositif de calcul externe est en outre configuré pour transmettre les informations estimées pour la période d'optimisation au dispositif de commande.

Le procédé 300 comprend par exemple une étape 340 (« SET (ΔT1) »), par exemple suivant l'étape 330. Au cours de l'étape 340, le dispositif de commande est configuré pour déterminer une période d'activation ΔT1. La période d'activation ΔT1 est comprise dans la période d'optimisation et est comprise dans une période de disponibilité d'activation, reçue à l'étape 310, d'un système flexible 205. Le dispositif de commande est par exemple en outre configuré pour déterminer une période de report ΔT2. La période de report ΔT2 est comprise dans la période d'optimisation et est par exemple comprise dans une période de disponibilité de report, reçue à l'étape 310, ou dans le délai de report estimé à l'étape 330, du système flexible 205. A titre d'exemple, la durée de la période de report ΔT2 est égale à la durée de la période d'activation ΔT1. Selon d'autres modes de réalisation, la durée de la période de report ΔT2 est différente de la durée de la période d'activation ΔT1.

La période d'activation ΔT1 est par exemple antérieure à la période de report ΔT2.

Selon un mode de réalisation, la période d'activation ΔT1 et la période de report ΔT2 sont par exemple chacune composée d'un ou plusieurs pas de temps dT, c'est-à-dire un intervalle de temps unitaire, discrets ou successifs.

La période d'activation ΔT1 et la période de report ΔT2 sont par exemple déterminées de sorte qu'une variation des émissions de gaz à effet de serre ΔE causée par l'activation du système flexible 205, sur la période d'activation ΔT1 et sur une période de report ΔT2, soit négative, c'est-à-dire qu'il y ait une réduction des émissions de gaz à effet de serre. Le dispositif de calcul et de commande est par exemple configuré pour utiliser l'estimation de l'évolution des émissions de gaz à effet de serre par le système d'alimentation électrique, effectuée au cours de l'étape 330, pour déterminer la période d'activation ΔT1 et par exemple la période de report ΔT2.

Selon un mode de réalisation, plusieurs couples sont déterminés, chaque couple comprenant une période d'activation et une période de report. La période d'activation et la période de report d'un couple étant comprises dans la période d'optimisation et étant comprises respectivement dans une période de disponibilité d'activation et dans une période de disponibilité de report d'un même système flexible 205.

Selon un mode de réalisation, le dispositif de commande est en outre configuré pour déterminer une puissance d'activation P1 et une puissance de report P2. La puissance d'activation P1 correspond à une puissance consommée ou produite par le système flexible 205 lors de la période d'activation ΔT1 et la puissance de report P2 correspond à une puissance consommée ou produite par le système flexible 205 lors de la période de report ΔT2. La puissance d'activation P1 d'un système flexible 205 est par exemple supérieure, inférieure ou égale à la capacité de report du système flexible 205. A titre d'exemple, la puissance d'activation P1 d'un système flexible 205 est par exemple inférieure ou égale à la capacité de report du système flexible 205 si le système flexible 205 est un consommateur et la puissance d'activation P1 d'un système flexible 205 est par exemple supérieure ou égale à la capacité de report du système flexible 205 si le système flexible 205 est un producteur.

Selon un mode de réalisation, la capacité de report d'un système flexible 205 varie au cours du temps et la puissance d'activation P1 varie au cours du temps, de sorte que, pour tout pas de temps, la puissance d'activation P1 soit supérieure, inférieure ou égale à la capacité de report.

Selon un mode de réalisation, plusieurs systèmes flexibles 205 sont groupés pour former un système flexible ayant une puissance d'activation P1 plus importante pour un même couple, par exemple égale à la somme des puissances d'activation de chacun des systèmes flexibles 205 du groupe.

Le procédé 300 comprend par exemple une étape 350 (« CALC ΔE »), par exemple suivant l'étape 340. Au cours de l'étape 350, le dispositif de commande est configuré pour calculer une variation des émissions de gaz à effet de serre ΔE générée par une variation de la demande sur la période d'activation ΔT1 déterminée à l'étape 340 et une variation opposée de la demande sur la période de report ΔT2 déterminée à l'étape 340. La demande est par exemple réduite ou augmentée d'une puissance correspondant à la puissance d'activation P1 au cours de la période d'activation ΔT1 et la demande est par exemple augmentée ou réduite, respectivement, d'une puissance correspondant à la puissance de report P2 au cours de la période de report ΔT2.

La variation des émissions de gaz à effet de serre ΔE est par exemple définie par :
$Δ E = Δ E \left(ΔT1\right) + Δ E \left(ΔT2\right)$
où ΔE(ΔT1) correspond à une variation des émissions de gaz à effet de serre d'une situation sans activation vers une situation avec activation lors de la période d'activation ΔT1, et ΔE(ΔT2) correspond à une variation des émissions de gaz à effet de serre d'une situation sans report vers une situation avec report lors de la période de report ΔT2.

La variation des émissions de gaz à effet de serre ΔE est négative s'il y a une réduction des émissions de gaz à effet de serre et la variation des émissions de gaz à effet de serre ΔE est positive s'il y a une augmentation des émissions de gaz à effet de serre.

Selon un mode de réalisation, la demande sur le système d'alimentation électrique diminue au cours de la période d'activation ΔT1 et augmente au cours de la période de report ΔT2. On a alors ΔE(ΔT1) négative, c'est-à-dire correspondant à une réduction des émissions de gaz à effet de serre, et ΔE(ΔT2) positive, c'est-à-dire correspondant à une augmentation des émissions de gaz à effet de serre. Le procédé 300 est alors configuré pour que ΔE(ΔT1), en valeur absolue, soit supérieure à ΔE(ΔT2).

Selon un autre mode de réalisation, la demande sur le système d'alimentation électrique augmente au cours de la période d'activation ΔT1 et diminue au cours de la période de report ΔT2. On a alors ΔE(ΔT1) positive et ΔE(ΔT2) négative. Le procédé 300 est alors configuré pour que ΔE(ΔT2), en valeur absolue, soit supérieure à ΔE(ΔT1).

Par exemple, la valeur ΔE(ΔT1) correspond à l'émission de gaz à effet de serre générée par le système d'alimentation électrique pour produire la puissance d'activation P1 au cours de la période d'activation ΔT1. Par exemple, la valeur ΔE(ΔT2) correspond à l'émission de gaz à effet de serre générée par le système d'alimentation électrique pour produire la puissance de report P2 au cours de la période de report ΔT2.

Selon un mode de réalisation, la période d'activation ΔT1 et/ou la période de report ΔT2 comprend plusieurs sous-intervalles de temps discontinus et chaque sous-intervalle de temps est associé à une puissance d'activation partielle ou à une puissance de report partielle. Chaque sous-intervalle de temps, chaque puissance d'activation partielle, et chaque puissance de report partielle associée sont déterminés selon le procédé 300, par exemple en prenant en compte des caractéristiques des systèmes flexibles, par exemple un nombre maximal d'activation sur la période d'optimisation, et par exemple en prenant en compte des règles d'opération du marché du système d'alimentation électrique. Chaque pas de temps de la période d'activation ΔT1 est par exemple associée à une capacité de report et la puissance d'activation partielle, déterminée par le procédé 300, est par exemple supérieure, inférieure ou égale à la capacité de report du pas de temps considéré. A titre d'exemple, la puissance d'activation partielle, déterminée par le procédé 300, est par exemple inférieure ou égale à la capacité de report du pas de temps considéré si le système flexible 205 est un consommateur et la puissance d'activation partielle, déterminée par le procédé 300, est par exemple supérieure ou égale à la capacité de report du pas de temps considéré si le système flexible 205 est un producteur. Chaque pas de temps de la période de report ΔT2 est par exemple associée à une puissance de report partielle.

La durée de la période d'activation ΔT1 est par exemple différente de la durée de la période de report ΔT2. L'augmentation ou la diminution de la demande au cours de la période de report ΔT2 est par exemple configurée pour compenser, en fonction du taux de report, la diminution ou l'augmentation, respectivement, de la demande au cours de la période d'activation ΔT1. En particulier, la variation de la demande causée par le report lors de la période de report ΔT2 correspond à l'énergie activée lors de la période d'activation ΔT1 multipliée par le taux de report.

Selon le mode de réalisation dans lequel plusieurs couples, comprenant chacun une période d'activation et une période de report, sont déterminés au cours de l'étape 340, l'étape 350 est par exemple exécutée pour chaque couple identifié lors de l'étape 340. Le couple comprenant la période d'activation ΔT1 et la période de report ΔT2 conduisant à la réduction des émissions de gaz à effet de serre ΔE la plus élevée, c'est-à-dire à la valeur ΔE la plus élevée en valeur absolue et négative, est par exemple retenu.

Selon un mode de réalisation, la variation des émissions de gaz à effet de serre ΔE est calculée de façon exhaustive pour chaque paire possible d'un ou plusieurs pas de temps d'activation et d'un ou plusieurs pas de temps de report. Les paires possibles sont ensuite triées selon la variation des émissions de gaz à effet de serre ΔE associée et un nombre fixé N de pas de temps est par exemple sélectionné pour la période d'activation ΔT1. Le nombre N de pas de temps est par exemple déterminée par la durée de la période d'activation ΔT1, de sorte que ΔT1=N*dT avec dT le pas de temps. Les N pas de temps de la période d'activation ΔT1, et la puissance d'activation P1 pour chaque pas de temps, sont par exemple choisis selon la variation des émissions de gaz à effet de serre ΔE calculée croissante, c'est-à-dire que les pas de temps correspondant aux N valeurs de ΔE les plus élevées en valeur absolue et négatives sont sélectionnés.

Selon un autre mode de réalisation, l'ensemble des couples déterminés au cours de l'étape 340 sont analysés par une fonction de résolution d'un problème d'optimisation afin de déterminer la période d'activation ΔT1, la période de report ΔT2 et la puissance d'activation P correspondant à la variation des émissions de gaz à effet de serre ΔE la plus élevée et négative.

Selon un autre mode de réalisation, l'ensemble des configurations est analysé par une fonction de résolution d'un problème d'optimisation, par exemple un problème d'optimisation de type optimisation linéaire en nombres entiers (de l'anglais « Mixed Integers Non-Linear Programming »), afin de déterminer le couple, comprenant la période d'activation ΔT1 et la période de report ΔT2, correspondant à la réduction des émissions de gaz à effet de serre la plus élevée, c'est-à-dire à la valeur ΔE la plus négative. La fonction de résolution du problème d'optimisation est par exemple configurée pour déterminer la période d'activation ΔT1 et la puissance d'activation P1. La fonction de résolution du problème d'optimisation est par exemple en outre configurée pour déterminer la période de report ΔT2 et la puissance de report P2 et/ou pour calculer la variation des émissions de gaz à effet de serre ΔE. La fonction de résolution du problème d'optimisation est par exemple configurée pour exécuter les étapes 330, 340, 350 et 360, une ou plusieurs fois. La fonction de résolution du problème d'optimisation est par exemple configurée pour déterminer un ou plusieurs couples ayant une variation des émissions de gaz à effet de serre ΔE relativement grande et négative, par exemple supérieure ou égale à 5% en valeur absolue.

La figure 3B représente un procédé 300' de réduction des émissions de gaz à effet de serre d'un système d'alimentation électrique selon un mode de réalisation de la présente description.

Le procédé 300' comprend par exemple les étapes 310 à 350 du procédé 300, détaillées en relation avec la figure 3A, et configurées pour déterminer la période d'activation ΔT1 et la puissance d'activation P1, la période de report ΔT2 et la puissance de report P2et pour calculer la réduction des émissions de gaz à effet de serre ΔE correspondante.

Le procédé 300' comprend par exemple une étape 360 (« COMM WITH FLEX »), par exemple suivant les étapes 310 à 350, dans laquelle le dispositif de commande est par exemple configuré pour transmettre une commande au système d'électricité flexible 205 pour que le système d'électricité flexible 205 soit activé au cours de la période d'activation ΔT1, c'est-à-dire qu'il varie sa consommation ou sa production dans le sens d'activation, en fonction de la puissance d'activation P1. Par exemple, le dispositif de commande est en outre configuré pour transmettre une commande au système d'électricité flexible 205 pour que le système d'électricité flexible 205 varie sa consommation ou sa production dans le sens opposé au sens d'activation au cours de la période de report ΔT2, par exemple en fonction de la puissance de report P2.

Par exemple, le dispositif de commande est configuré pour envoyer au système d'électricité flexible 205 une consigne comprenant la période d'activation ΔT1, la puissance d'activation P1, et par exemple la période de report ΔT2 et la puissance de report P2. Le système d'électricité flexible 205 est par exemple configuré pour varier sa consommation ou sa production au cours de la période d'activation ΔT1 en fonction de la puissance d'activation P1 et par exemple pour varier inversement sa consommation ou sa production au cours de la période de report ΔT2 en fonction de la puissance de report P2. Le dispositif de commande est par exemple configuré pour moduler la consommation ou la production du système d'électricité flexible 205, par exemple par l'intermédiaire d'un variateur de vitesse ou d'un relais de puissance.

La transmission de la commande est par exemple effectuée par l'intermédiaire d'un DERMS, par exemple selon un protocole de communication MQTT (de l'anglais "Message Queuing Telemetry Transport") ou DNP3 (de l'anglais "Distributed Network Protocol 3"), par l'intermédiaire d'un dispositif de communication du système, par téléphone, par courrier électronique, etc.

Le dispositif de commande est par exemple en outre configuré pour intégrer dans le système central de gestion d'énergie 106, décrit en relation avec la figure 1, par exemple au DERMS 150 du système central de gestion d'énergie 106, un ordre de régulation, par exemple pour chaque pas de temps de la période d'activation ΔT1 et pour chaque pas de temps de la période de report ΔT2.

Selon des modes de réalisation, le système flexible 205 ne transmet pas de période de disponibilité de report, lors de l'étape 310 du procédé 300 ou 300'. Le dispositif de commande est par exemple configuré pour estimer le taux de report et le délai de report lors de l'étape 330 du procédé 300 ou 300'. Le taux de report et le délai de report sont par exemple utilisés pour calculer une variation des émissions de gaz à effet de serre ΔE lors de l'étape 350 du procédé 300 ou 300'. Lors de l'étape 360 du procédé 300', le dispositif de commande est alors par exemple configuré pour envoyer au système d'électricité flexible 205 une consigne comprenant la période d'activation ΔT1 et la puissance d'activation P1.La puissance d'activation P1 correspond par exemple à une régulation, c'est-à-dire à une variation continue au sein de la période d'optimisation d'un signal de réglage, par exemple en fonction de la fréquence du réseau dans le cas d'une réserve primaire ou en fonction d'un signal de régulation envoyé par le gestionnaire du réseau de transport dans le cas d'une réserve secondaire. La puissance d'activation P1 correspond par exemple à un effacement ou à une stimulation, c'est-à-dire à une variation de consommation ou de production d'un bloc d'énergie sur la période d'optimisation.

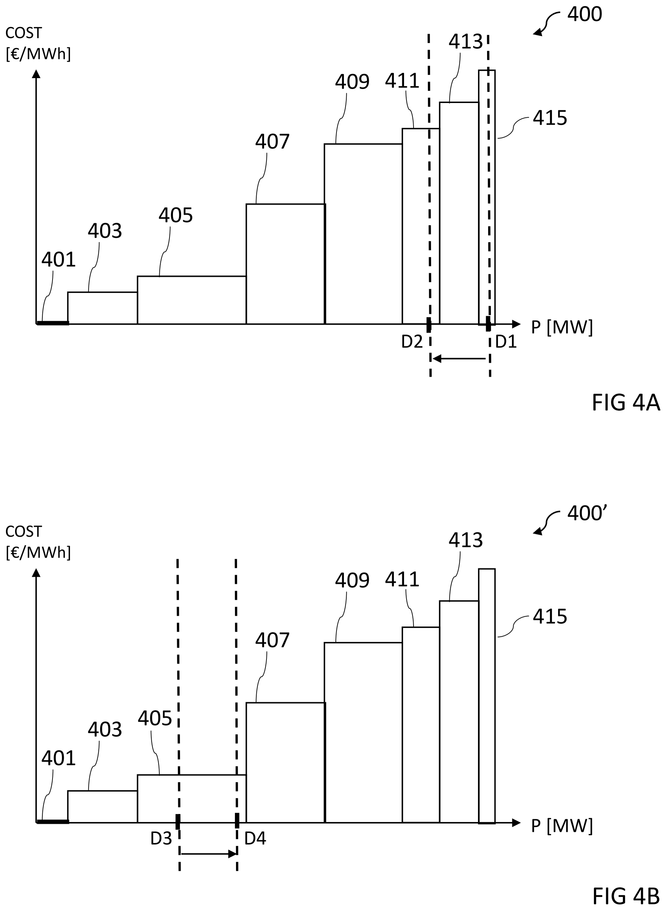

La figure 4A est un graphe 400 illustrant le coût unitaire (« COST [€/MWh] ») d'une unité de puissance (« P [MW] ») produite par une pluralité de dispositifs, pendant une heure, ainsi qu'un exemple d'une répartition de la puissance produite par le système d'alimentation électrique selon un mode de réalisation de la présente description.

Le coût unitaire correspond aux coûts variables de production d'une unité d'énergie, par exemple comprenant le coût des combustibles mais ne comprenant pas les coûts fixes tels que des salaires ou un coût de financement.

Dans l'exemple de la figure 4A, la puissance distribuée par le système d'alimentation électrique est générée par des dispositifs 401, 403, 405, 407, 409, 411, 413 et 415. Chacun des dispositifs 401 à 415 est par exemple un générateur configuré pour générer une puissance à un coût unitaire fixé. Par exemple, le dispositif 401 est configuré pour générer une puissance P1 gratuitement, c'est-à-dire avec un coût unitaire de 0 €/MWh. Le dispositif 401 est par exemple une éolienne ou un panneau photovoltaïque.

Dans le graphe 400, les dispositifs 401 à 415 sont ordonnés selon le coût unitaire de l'énergie générée. Par exemple, les souhaitent acheter de l'électricité ayant un coût relativement faible et les générateurs sont sélectionnés par ordre croissant de leur coût unitaire.

Selon un mode de réalisation, les générateurs 220 sont classés dans différentes catégories comprenant des centrales de référence (en anglais, « base load plants »), configurées pour générer une puissance de référence, et des centrales de forte demande (en anglais, « peak power plants »), configurées pour générer une puissance permettant de répondre à une relativement forte demande de puissance électrique. Le coût unitaire des générateurs varie par exemple en fonction de la catégorie du générateur et de son éventuel engagement en réserve.

La demande D du système d'alimentation électrique correspond à une puissance souhaitée par un ensemble d'actifs. Dans l'exemple de la figure 4A, les dispositifs sont ordonnés selon le coût unitaire croissant de l'énergie générée.

La figure 4A illustre une évolution de la demande et une évolution de la répartition de la demande entre des générateurs au cours de la période d'activation ΔT1. Suite à une exécution du procédé 300 ou du procédé 300', la demande, au cours de la période d'activation ΔT1, évolue d'une demande D1 à une demande D2, la demande D2 étant inférieure à la demande D1 dans l'exemple de la figure 4A.

Une émission de gaz à effet de serre du système d'alimentation électrique pour satisfaire à une demande correspond à la somme des émissions de gaz à effet de serre de chacun des dispositifs 401 à 415, considéré selon le coût unitaire croissant de l'énergie générée, nécessaire pour satisfaire la demande.

Dans l'exemple de la figure 4A, les générateurs 401, 403, 405, 407, 409, 411, 413 et 415 sont nécessaires pour satisfaire D1 et les générateurs 401, 403, 405, 407, 409 et 411 sont nécessaires pour satisfaire D2. Les générateurs 411, 413 et 415 sont configurés pour réduire leur production d'électricité pour répondre à la diminution de la demande.

La figure 4B est un graphe 400' illustrant le coût unitaire (« COST [€/MWh] ») d'une unité de puissance (« P [MW] ») produite par les dispositifs 401 à 415 de la figure 4A, pendant une heure, ainsi qu'un exemple d'une répartition de la puissance produite par le système d'alimentation électrique selon un autre mode de réalisation de la présente description.

Des éléments de la figure 4B sont similaires à des éléments de la figure 4A. Ces éléments sont référencés avec la même référence et ne sont pas décrits à nouveau en détail.

La figure 4B illustre une évolution de la demande et une évolution de la répartition de la demande entre des générateurs au cours de la période de report ΔT2. Suite à une exécution du procédé 300 ou du procédé 300', la demande, au cours de la période de report ΔT2, évolue d'une demande D3 à une demande D4, la demande D4 étant supérieure à la demande D3, dans l'exemple des figures 4A et 4B.

Dans l'exemple de la figure 4B, les générateurs 401, 403 et 405 sont nécessaires et suffisants pour satisfaire D3 et pour satisfaire D4. Le générateur 405 est configuré pour augmenter sa production d'électricité pour répondre à l'augmentation de la demande.

La diminution de la demande au cours de la période d'activation ΔT1, illustrée par la figure 4A, est compensée par l'augmentation de la demande au cours de la période de report ΔT2, illustrée par la figure 4B.

Dans d'autres exemples, la diminution de la demande au cours de la période d'activation ΔT1 est compensée partiellement, en fonction du taux de report, par l'augmentation de la demande au cours de la période de report ΔT2.

La période d'activation ΔT1 et la période de report ΔT2 sont déterminées par le procédé 300 ou par le procédé 300' de sorte que les émissions de gaz à effet de serre évitées par la diminution de la demande au cours de la période d'activation ΔT1 soient supérieures aux émissions de gaz à effet de serre supplémentaires causées par l'augmentation de la demande au cours de la période de report ΔT2. Le procédé 300 ou le procédé 300' est par exemple exécuté pour identifier la période d'activation ΔT1 et la période de report ΔT2 les plus avantageuses, en fonction des émissions en gaz à effet de serre des dispositifs.

L'émission de gaz à effet de serre E du système d'alimentation électrique, au cours d'un pas de temps dT, est par exemple définie par :
$E = {\sum }_{i} {Em}_{i} \times {P}_{i} \times dT$
avec Emᵢ l'émission unitaire de gaz à effet de serre du dispositif i et Pᵢ la puissance générée par le dispositif i au cours du pas de temps dT.

La réduction des émissions de gaz à effet de serre réalisée est par exemple calculée au cours du procédé 300 ou du procédé 300'.

D'après l'équation (1), on a ΔE = ΔE(ΔT1)+ΔE(ΔT2).

Dans l'exemple des figures 4A et 4B, ΔE(ΔT1) est négatif et correspond aux émissions évitées par les générateurs 411, 413 et 415 et ΔE(ΔT2) est positif et correspond aux émissions supplémentaires causées par le générateur 405. La période d'activation ΔT1 et la période de report ΔT2 sont déterminées par le procédé 300 ou 300' de sorte que le générateur 405 ait une émission unitaire de gaz à effet de serre inférieure à celle de la combinaison des générateurs 411, 413 et 415, de sorte que la variation des émissions de gaz à effet de serre ΔE soit négative.

L'étape 360 du procédé 300', décrite en relation avec la figure 3B, est par exemple exécutée pour que le système flexible 205 reporte sa consommation de la période d'activation ΔT1 à la période de report ΔT2.

Les procédés 300 et 300' ainsi que les systèmes décrits ont l'avantage de permettre de déterminer des configurations conduisant à une réduction d'une émission en gaz à effet de serre du système d'alimentation électrique.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, l'ordre des étapes des procédés est indicatif et la personne du métier saura adapter les procédés décrits en fusionnant certaines étapes ou en modifiant l'ordre d'exécution des étapes. Bien qu'un système d'alimentation électrique alternatif soit décrit, la personne du métier saurait adapter les modes de réalisation décrits dans la présente demande à un système d'alimentation électrique continu.

Enfin, la mise en œuvre pratique des modes de réalisation et variantes décrits est à la portée de la personne du métier à partir des indications fonctionnelles données ci-dessus.

## Revendications

1. Procédé d'estimation d'une variation des émissions de gaz à effet de serre (ΔE) d'un système d'alimentation électrique fonctionnant en réponse de la demande, sur une période d'optimisation, le procédé comprenant :
a) la réception, par un dispositif de commande (210), de caractéristiques de fonctionnement, comprenant au moins une période de disponibilité d'activation, un sens d'activation, et une capacité de report, d'un ou plusieurs systèmes d'électricité flexibles (205), la période de disponibilité d'activation étant comprise dans la période d'optimisation ;
b) la réception, par le dispositif de commande (210), d'informations sur le système d'alimentation électrique comprenant un état de la demande et une répartition de la demande entre une pluralité d'actifs générateurs (220) du système d'alimentation électrique, au cours d'une période historique, la période historique étant antérieure à la période d'optimisation ;
c) la détermination, par le dispositif de commande (210), d'une période d'activation (ΔT1) et d'une période de report (ΔT2), l'émission de gaz à effet de serre par les actifs générateurs (220) du système d'alimentation électrique étant supérieure pendant la période d'activation (ΔT1) que pendant la période de report (ΔT2) si la demande diminue sur la période d'activation (ΔT1) et augmente sur la période de report (ΔT2) et l'émission de gaz à effet de serre par les actifs générateurs (220) du système d'alimentation électrique étant inférieure pendant la période d'activation (ΔT1) que pendant la période de report (ΔT2) si la demande augmente sur la période d'activation (ΔT1) et diminue sur la période de report (ΔT2), la période d'activation (ΔT1) étant comprises dans la période de disponibilité d'activation d'au moins un des un ou plusieurs systèmes d'électricité flexibles (205) et la période de report étant comprise dans la période d'optimisation ;
d) le calcul, par le dispositif de commande (210), de la variation des émissions de gaz à effet de serre (ΔE) générée par une variation de la demande sur la période d'activation (ΔT1) déterminée à l'étape c) et une variation opposée de la demande sur la période de report (ΔT2) déterminée à l'étape c).

2. Procédé de réduction des émissions de gaz à effet de serre d'un système d'alimentation électrique fonctionnant en demande-réponse, le procédé comprenant :
- le procédé d'estimation d'une variation des émissions de gaz à effet de serre (ΔE) selon la revendication 1 ; et
e) la transmission d'une commande à l'au moins un système d'électricité flexible (205) pour que sa consommation, ou production, varie, selon le sens d'activation, par une puissance inférieure ou égale à la capacité de report, sur la période d'activation (ΔT1) déterminée à l'étape c) et pour que sa consommation, ou production, varie, selon le sens opposé au sens d'activation, sur la période de report (ΔT2) déterminée à l'étape c).

3. Procédé selon la revendication 1 ou 2, dans lequel la période d'activation (ΔT1) et la période de report (ΔT2) sont déterminées de sorte que la variation des émissions de gaz à effet de serre (ΔE) soit négative, correspondant à une réduction des émissions de gaz à effet de serre (ΔE).

4. Procédé selon l'une quelconque des revendications 1 à 3, dans lequel, à l'étape c), plusieurs couples sont déterminés, chaque couple comprenant une période d'activation et une période de report.

5. Procédé selon la revendication 4, dans lequel :
- l'étape d) est répétée pour chaque couple déterminé à l'étape c) ; et
- la période d'activation (ΔT1) et la période de report (ΔT2) correspondent au couple générant la variation des émissions de gaz à effet de serre (ΔE) correspondant à une réduction des émissions de gaz à effet de serre la plus élevée.

6. Procédé selon l'une quelconque des revendications 1 à 5, dans lequel, à l'étape c), une fonction de résolution d'un problème d'optimisation est utilisée pour déterminer la période d'activation (ΔT1) et la période de report (ΔT2).

7. Procédé selon l'une quelconque des revendications 1 à 6, comprenant en outre, à l'étape c), la détermination d'une puissance d'activation (P1), la puissance d'activation (P1) étant inférieure ou égale à la capacité de report de l'au moins un des systèmes d'électricité flexibles (205) et la puissance d'activation (P1) correspondant à une variation de la demande, générée par l'au moins un système d'électricité flexible (205), au cours de la période d'activation (ΔT1).

8. Procédé selon l'une quelconque des revendications 1 à 7, comprenant en outre, après l'étape b) et avant l'étape c), pour une pluralité de pas de temps de la période d'optimisation, la détermination d'une évolution de la répartition de la demande entre une pluralité d'actifs générateurs (220) du système d'alimentation électrique.

9. Procédé selon la revendication 8, comprenant en outre, après l'étape b) et avant l'étape c), pour la pluralité de pas de temps de la période d'optimisation, la détermination d'une émission de gaz à effet de serre de la pluralité d'actifs générateurs (220) du système d'alimentation électrique.

10. Procédé selon l'une quelconque des revendications 8 ou 9, dans lequel l'émission de gaz à effet de serre d'un actif générateur correspond à l'émission de gaz à effet de serre produite par la génération d'une unité d'énergie.

11. Procédé selon l'une quelconque des revendications 1 à 10, comprenant en outre, après l'étape b) et avant l'étape c), pour une pluralité de pas de temps de la période d'optimisation, la détermination d'une évolution de la demande du système d'alimentation électrique.

12. Dispositif de commande (210) configuré pour :
a) recevoir des caractéristiques de fonctionnement, comprenant au moins une période de disponibilité d'activation, un sens d'activation et une capacité de report, d'un ou plusieurs systèmes d'électricité flexibles (205), la période de disponibilité d'activation étant comprise dans la période d'optimisation ;
b) recevoir des informations sur le système d'alimentation électrique comprenant un état de la demande sur la période d'optimisation et une répartition de la demande entre une pluralité d'actifs générateurs (220) du système d'alimentation électrique, au cours d'une période historique, la période historique étant antérieure à la période d'optimisation ;
c) déterminer une période d'activation (ΔT1) et une période de report (ΔT2), l'émission de gaz à effet de serre par les actifs générateurs (220) du système d'alimentation électrique étant supérieure pendant la période d'activation (ΔT1) que pendant la période de report (ΔT2) si la demande diminue sur la période d'activation (ΔT1) et augmente sur la période de report (ΔT2) et l'émission de gaz à effet de serre par les actifs générateurs (220) du système d'alimentation électrique étant inférieure pendant la période d'activation (ΔT1) que pendant la période de report (ΔT2) si la demande augmente sur la période d'activation (ΔT1) et diminue sur la période de report (ΔT2), la période d'activation (ΔT1) étant comprises dans la période de disponibilité d'activation d'au moins un des un ou plusieurs systèmes d'électricité flexibles (205) ;
d) calculer la variation des émissions de gaz à effet de serre (ΔE) générée par une variation de la demande sur la période d'activation (ΔT1) déterminée à l'étape c) et une variation opposée de la demande sur la période de report (ΔT2) déterminée à l'étape c).

13. Dispositif de commande selon la revendication 12, en outre configuré pour :
e) transmettre une commande à l'au moins un système d'électricité flexible (205) pour que sa consommation, ou production, varie, selon le sens d'activation, par une puissance inférieure ou égale à la capacité de report, sur la période d'activation (ΔT1) déterminée à l'étape c) et pour que sa consommation, ou production, varie, selon le sens opposé au sens d'activation, sur la période de report (ΔT2) déterminée à l'étape c).

14. Système de régulation d'une puissance comprenant :
- le dispositif de commande (210) selon la revendication 12 ou 13 ; et
- un ou plusieurs systèmes d'électricité flexibles (205),
le dispositif de commande (210) étant configuré pour communiquer avec l'un ou plusieurs systèmes d'électricité flexibles (205).
